# EUROPEAN PATENT APPLICATION

(11) **EP 2 175 253 A1**
(43) Date of publication of application: **14.04.2010**
(21) Application number: 08425656.9
(22) Date of filing: 09.10.2008
(51) Int. Cl.: G01L 19/12, F16K 7/10, F16L 55/12

(54) **Ball plugs inflating pressure automatic control device for interventions on low pressure inflammable fluids supply piping**

(71) Applicant: I.S.I.F. S.R.L., 52027 San Giovanni Valdarno (IT)
(72) Inventor: Odori, Mauro, 52020 Castelfranco di Sopra (AR) (IT)

(57) **Abstract**

In interventions on low pressure flammable fluids supply piping, the flow is stopped by means of couples of pneumatic plugs inserted inside the pipe and then inflated with pressure indicated by the manufacturer. Risks related to these operations arise from the eventuality that the plugs can be damaged (because of wear, manufacturing defects, bad maintenance, wrong inflating pressure) and slowly deflate or even burst. The intervention area, where pipe welding is operated, can be quickly reached by flammable fluid: in this case, when any of the operators realizes that the plug damage has occurred, welding is immediately stopped and damaged plugs are replaced. It's clear that a late comprehension of the problem would establish very dangerous conditions for fire and explosion.
The Ball Plug Pressure Automatic Control Device faces this need operating (by means of an electronic pressure sensor) a continuous checking of the plug's inflating pressure and giving out (if this pressure decreases under a fixed threshold) a loud acoustic alarm to warn the operators in real time.

## Description

Any intervention on low pressure (0,02 bar) inflammable fluids supply piping in service that needs steel piping to be cut and then jointed by welding makes the operators stop the flow by means of proper ball plugs available on the market. Couples of plugs are inserted inside the pipe (manually or by means of specific machines) through proper fittings welded on the pipe. Once they are inserted, the plugs are inflated (with pressures indicated by the manufacturer) so that to completely obstruct the inner section of the pipe and to stop the flammable fluid flow. Risks related with this operation arise from the fact that the plugs, once installed, can slowly deflate or burst ( this can be caused by bad maintenance, wrong inflating pressures, manufacturing defects, bad insertion operations, cutting edges or slag inside the pipe): if one only of the plugs of a couple is damaged, you have a decrease of the safety level of working (as the flammable fluid has one only plug ahead); if both plugs of a couple are damaged, the flammable fluid can reach in very short time the welding zone with heavy risk of fire and explosion. The remedies implemented in this situations are to immediately stop welding and replace damaged plugs: these remedies can be done only when any of the operators realizes that a damage has occurred, with evident risk of late implementation of emergency actions. It doesn't seem to exist, by now, an automatic system able to detect the damages in real time and immediately alert the operators.

The Ball Plug Pressure Automatic Control Device (in the following Automatic Control Device) faces this kind of need as it makes possible, by continuously measuring the inflating pressure of the plug, to immediately detect a decrease of the inflating pressure (caused by slow deflating or burst) and to give out a loud acoustic alarm to warn the operators.

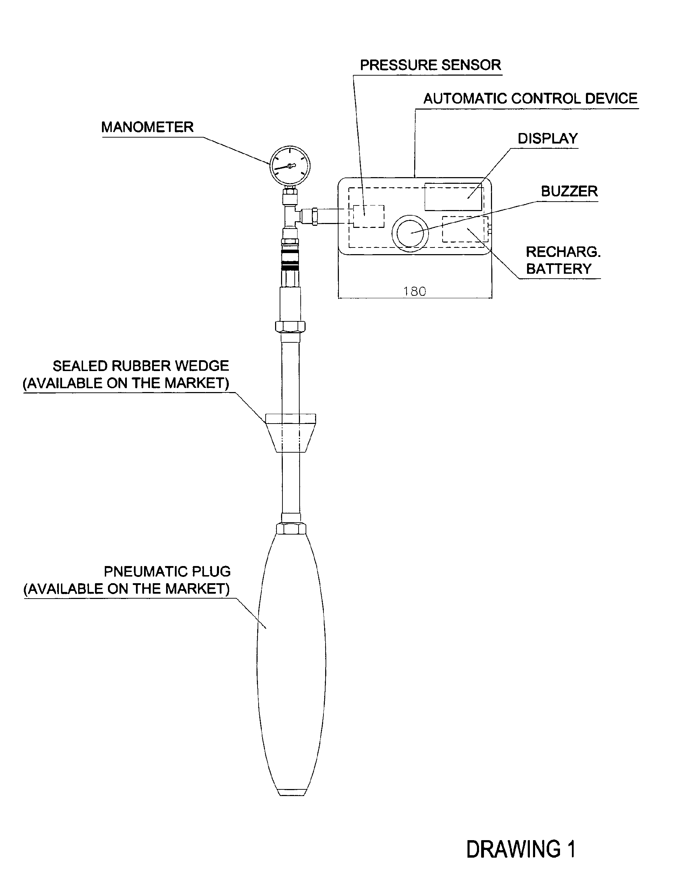

The Automatic Control Device (Drawing 1) is composed by an air-proof box to be assembled (by means of proper fittings able to interface with common plugs inflating fittings) on the plug: as the plug inflating valve is open, the pressure is measured by the electronic pressure sensor inside the box and its value is displayed on a screen. The pressure sensor, mounted on an electronic board, measures continuously the value of the plug's inner pressure: if it decreases, respect the beginning inflating value, below a fixed quantity (i.e.: -0.1 bar), the pressure sensor, through the electronic board, actuates the loud acoustic alarm to warn the operators about the damage occurred on the related plug. The alarm condition is also displayed on the screen and one led is lighted. The power supply of the device is given by a 12V rechargeable battery (by means of a proper connector) inside the box. The Automatic Control Device is small sized and light (approximately 500g), and can be, so, easily handled by the operators on the yard.

## Claims

1. The Automatic Control Device is the first automatic equipment that operates a continuous checking of plugs' working efficiency and that warns in real time the operators of the occurring of dangerous events (plug damage or burst) making them able to immediately actuate the necessary remedies.
